# EUROPEAN PATENT SPECIFICATION

(11) **EP 3 076 572 B1**
(45) Date of publication and mention of the grant of the patent: **04.04.2018**
(21) Application number: 13900079.8
(22) Date of filing: 24.12.2013
(51) Int. Cl.: H04J 3/06

(54) **CLOCK SYNCHRONIZATION METHOD FOR MULTIPLE CLOCK DOMAINS, LINE CARD, AND ETHERNET DEVICE**
TAKTSYNCHRONISIERUNGSVERFAHREN FÜR MEHRERE TAKTDOMÄNEN, LEITUNGSKARTE UND ETHERNET-VORRICHTUNG
PROCÉDÉ DE SYNCHRONISATION D'HORLOGE POUR DOMAINES D'HORLOGE MULTIPLES, CARTE DE LIGNES, ET DISPOSITIF ETHERNET

(43) Date of publication of application: 05.10.2016
(73) Proprietor: Huawei Technologies Co., Ltd., Longgang District Shenzhen, Guangdong 518129 (CN)
(72) Inventor: LIU, Fan, Shenzhen Guangdong 518129 (CN); LIN, Liankui, Shenzhen Guangdong 518129 (CN); LV, Xin, Shenzhen Guangdong 518129 (CN)
(74) Representative: Pfenning, Meinig & Partner mbB
(86) International application number: PCT/CN2013/090352
(87) International publication number: WO 2015/096041

(56) References cited:
- EP-A1- 2 487 819
- CN-A- 1 555 149
- CN-A- 101 296 070
- CN-A- 101 515 832
- CN-A- 101 741 539
- CN-A- 102 263 629
- KR-A- 20010 083 747
- US-A1- 2010 074 278
- US-A1- 2013 089 170

## Description

### TECHNICAL FIELD

The present invention relates to the field of communications technologies, and in particular, to a clock synchronization method in a multi-clock domain, a line card, and an Ethernet device.

### BACKGROUND

In evolution from a telecommunications service provider network to a next generation network, an Ethernet network gradually replaces plesiochronous digital hierarchy (PDH) and Synchronous Optical Network, synchronous optical network (SONET)/Synchronous Digital Hierarchy, synchronous digital hierarchy (SDH) transport networks.

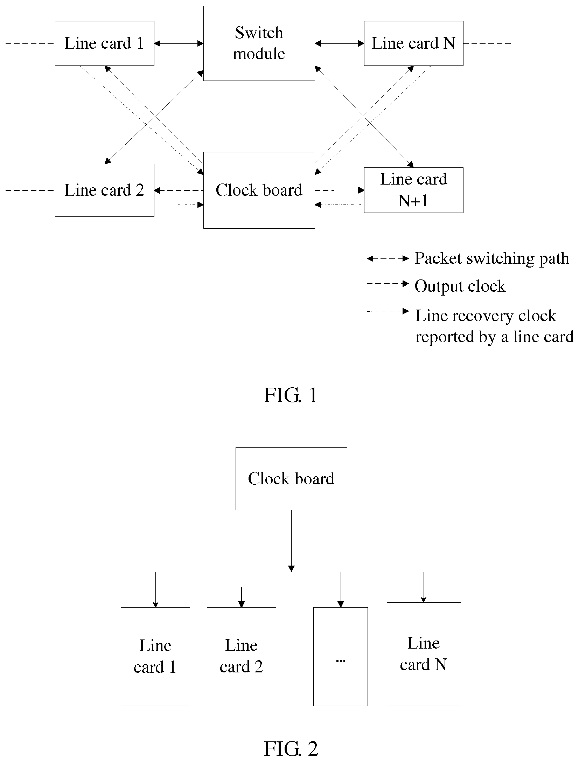

In the Ethernet, an important element is a synchronization clock. Referring to FIG. 1, FIG. 1 shows a typical Ethernet clock synchronization scheme. A solid double-headed arrow represents a path for data packet switching performed by a line card by using a switch module. Each line card recovers a clock on a receiving line, and then reports a line recovery clock to a clock board. The clock board selects one line recovery clock according to a configuration and uses the clock as a synchronization reference source of a device. A synchronization clock that has undergone phase-locked processing is delivered to each line card and is used as a reference clock for sending by the line card, thereby implementing sending based on a synchronization clock.

However, in the existing Ethernet, an operator usually leases an Ethernet device to different service providers, and the service providers have different clock sources. Therefore, the different clock sources need to be traced, that is, the Ethernet device needs to support a multi-clock domain. However, in an existing clock synchronization mechanism, an Ethernet interface of a single device delivers only one physical layer synchronization clock for one system, that is, all lines use a same transmit clock; therefore, clock transfer in a multi-clock domain cannot be implemented.

US 2013/0089170A discloses that a plurality of clock domain information from the clients that are connected on the ingress side is transmitted to the egress line cards. Two or more egress interfaces generate different clocks that are synchronized to the multiple clock domains.

US2010/074278A discloses that each slave interface of each timing domain independently determines timing information based on a received master clock synchronization event and the value of the local time when that synchronization event was received.

### SUMMARY

The present invention is as defined in the appended independent claims. Further implementations are disclosed in the appended dependent claims, description and figures. Embodiments of the present invention provide a clock synchronization method in a multi-clock domain, a line card, and an Ethernet device, so as to resolve a problem in the prior art that clock transfer in a multi-clock domain cannot be implemented by using a clock synchronization mechanism.

A first aspect of the embodiments of the present invention provides a clock synchronization method in a multi-clock domain, including:
acquiring, by a sending line card, M clock frequency differences between M line clocks and a system clock, the differences are determined by a receiving line card for each one of M uplink interfaces
corresponding to M downlink interfaces on the sending line card, where the M uplink interfaces are uplink interfaces on the receiving line card, and M is a positive integer; and
adjusting, by the sending line card by using each clock frequency difference of the M clock frequency differences of the M uplink interfaces and based on a correspondence between the M downlink interfaces and the M uplink interfaces, a transmit clock of each interface according to a clock frequency difference of a line corresponding to the interface.

With reference to the first aspect, in a first possible implementation manner of the first aspect, before the acquiring, by a sending line card, M clock frequency differences that are determined by a receiving line card and that are of M uplink interfaces corresponding to M downlink interfaces on the sending line card, the method further includes: recovering, by the receiving line card, line clocks of N uplink interfaces on the receiving line card to obtain N line recovery clocks, where N is greater than or equal to M; and determining, by the receiving line card, a clock frequency difference between each of the N line recovery clocks and a system clock to obtain N clock frequency differences of the N uplink interfaces, where the M clock frequency differences are frequency differences of the N clock frequency differences.

With reference to the first possible implementation manner of the first aspect, in a second possible implementation manner of the first aspect, before the acquiring, by a sending line card, M clock frequency differences that are determined by a receiving line card and that are of M uplink interfaces corresponding to M downlink interfaces on the sending line card, the method further includes: further determining, by the receiving line card from the N uplink interfaces and based on a correspondence between an uplink interface and an interface on the sending line card, the M uplink interfaces corresponding to the M downlink interfaces on the sending line card; and sending, by the receiving line card, the M clock frequency differences of the M uplink interfaces to the sending line card.

With reference to the first possible implementation manner of the first aspect, in a third possible implementation manner of the first aspect, the acquiring, by a sending line card, M clock frequency differences that are determined by a receiving line card and that are of M uplink interfaces corresponding to M downlink interfaces on the sending line card includes: receiving, by the sending line card, the N clock frequency differences of the N uplink interfaces sent by the receiving line card; determining, by the sending line card and based on a correspondence between each interface on the sending line card and an uplink interface, the M uplink interfaces corresponding to the M downlink interfaces; and acquiring, by the sending line card and based on the M uplink interfaces, the M clock frequency differences. With reference to the first aspect or any one of the first possible implementation manner of the first aspect to the third possible implementation manner of the first aspect, in a fourth possible implementation manner of the first aspect, the adjusting, by using each clock frequency difference of M clock frequency differences of the M uplink interfaces, a transmit clock of an interface corresponding to the clock frequency difference includes: adjusting, by the sending line card, a transmit clock of each interface of the M downlink interfaces to a sum of a clock frequency difference corresponding to the interface and the system time difference. A second aspect of the embodiments of the present invention provides a line card, including:
M interfaces, where M is a positive integer; an interface circuit, configured to recover line clocks of M uplink interfaces corresponding to the M interfaces, to obtain M line recovery clocks; a frequency difference determining circuit, configured to determine a clock frequency difference between each of the M line recovery clocks and a system clock, to obtain M clock frequency differences of the M uplink interfaces; a processor, configured to send the M clock frequency differences to a sending line card, so that the sending line card adjusts, based on the M clock frequency differences, a transmit clock of an interface on the sending line card; and further configured to receive the M clock frequency differences of the M uplink interfaces corresponding to the M interfaces sent by a receiving line card; and a clock adjustment circuit, configured to adjust, based on a correspondence between each interface on the sending line card and the M uplink interfaces and by using each clock frequency difference of the M clock frequency differences of the M uplink interfaces sent by the receiving line card, a transmit clock of an interface corresponding to the clock frequency difference.

With reference to the second aspect, in a first possible implementation manner of the second aspect, the processor is further configured to: determine, based on a correspondence between an uplink interface and an interface on the sending line card and from the M clock frequency differences determined by the frequency difference determining circuit, a clock frequency difference on an uplink interface corresponding to each interface on the sending line card; and send the clock frequency difference on the uplink interface corresponding to the interface on the sending line card to a corresponding sending line card.

With reference to the second aspect, in a second possible implementation manner of the second aspect, the processor is further configured to receive N clock frequency differences of N uplink interfaces sent by the receiving line card, where the N clock frequency differences include the M clock frequency differences of the M uplink interfaces corresponding to the M interfaces, and N is a positive integer greater than or equal to M; and further configured to determine, based on a correspondence between each interface on the sending line card and an uplink interface, the M uplink interfaces corresponding to the M interfaces, and determine the M clock frequency differences of the M uplink interfaces corresponding to the M interfaces. With reference to the second aspect or the first possible implementation manner of the second aspect or the second possible implementation manner of the second aspect, in a third possible implementation manner of the second aspect, the clock adjustment circuit is configured to adjust a transmit clock of each interface of the M interfaces to a sum of a clock frequency difference corresponding to the interface and a system time difference.

With reference to the second aspect or any one of the first possible implementation manner of the second aspect to the third possible implementation manner of the second aspect, in a fourth possible implementation manner of the second aspect, the frequency difference determining circuit is specifically a counter or a phase-locked loop phase detector.

With reference to the second aspect or any one of the first possible implementation manner of the second aspect to the fourth possible implementation manner of the second aspect, in a fifth possible implementation manner of the second aspect, the clock adjustment circuit is specifically a phase-locked loop frequency detector.

With reference to the second aspect or any one of the first possible implementation manner of the second aspect to the fifth possible implementation manner of the second aspect, in a sixth possible implementation manner of the second aspect, the M interfaces are specifically Ethernet interfaces.

A third aspect of the embodiments of the present invention further provides an Ethernet device, including:
multiple line cards; and
a clock board, configured to generate a system clock and send the system clock to each line card of the multiple line cards, where
each line card of the multiple line cards is the line card according to the second aspect or any one of the first possible implementation manner of the second aspect to the sixth possible implementation manner of the second aspect.

Beneficial effects of the present invention are as follows:
In the embodiments of the present invention, a sending line card acquires M clock frequency differences that are determined by a receiving line card and that are of M uplink interfaces corresponding to M downlink interfaces on the sending line card, where the M uplink interfaces are uplink interfaces on the receiving line card, and M is a positive integer; and the sending line card adjusts, by using each clock frequency difference of the M clock frequency differences of the M uplink interfaces and based on a correspondence between each interface on the sending line card and the M uplink interfaces, a transmit clock of each interface according to a clock frequency difference of a line corresponding to the interface. Therefore, in the embodiments, first, the receiving line card determines a clock frequency difference between each line clock and a system clock, and then the sending line card adjusts a transmit clock of each interface according to a clock frequency difference of a line corresponding to the interface. Therefore, each interface may trace a different line, that is, trace a different clock source, so as to implement clock synchronization in a multi-clock domain. Further, in the solutions in the embodiments of this invention, a clock is recovered by the receiving line card, and a physical layer clock is recovered. Therefore, in the embodiments of this invention, processing is performed at a physical layer, and packets are not involved, thereby achieving better performance.

### BRIEF DESCRIPTION OF DRAWINGS

FIG. 1 is a schematic diagram of a clock synchronization scheme in the prior art;
FIG. 2 is a functional block diagram of an Ethernet device according to an embodiment of the present invention;
FIG. 3 is a flowchart of a clock synchronization method according to an embodiment of the present invention;
FIG. 4a is a schematic diagram of a table of a correspondence between an uplink interface and a downlink interface according to an embodiment of the present invention;
FIG. 4b is a schematic diagram of a correspondence, between a line and an interface, reflected in terms of a packet switching path according to an embodiment of the present invention;
FIG. 5 is a functional block diagram of a line card according to an embodiment of the present invention; and
FIG. 6 is an exemplary concept diagram of hardware implementation of a line card according to an embodiment of the present invention.

### DESCRIPTION OF EMBODIMENTS

Embodiments of the present invention provide a clock synchronization method in a multi-clock domain, a line card, and an Ethernet device, so as to resolve a problem in the prior art that clock transfer in a multi-clock domain cannot be implemented by using a clock synchronization mechanism.

To resolve the foregoing technical problem, a general idea of technical solutions in the embodiments of this invention is as follows:
A sending line card acquires M clock frequency differences that are determined by a receiving line card and that are of M uplink interfaces corresponding to M downlink interfaces on the sending line card, where the M uplink interfaces are uplink interfaces on the receiving line card, and M is a positive integer; and the sending line card adjusts, by using each clock frequency difference of the M clock frequency differences of the M uplink interfaces and based on a correspondence between each interface on the sending line card and the M uplink interfaces, a transmit clock of an interface corresponding to the clock frequency difference. Therefore, in the embodiments, first, the receiving line card determines a clock frequency difference between each line clock and a system clock, and then the sending line card adjusts a transmit clock of each interface according to a clock frequency difference of a line corresponding to the interface. Therefore, each interface may trace a different line, that is, trace a different clock source, so as to implement clock synchronization in a multi-clock domain. Further, in the solutions in the embodiments of this invention, a clock is recovered by the receiving line card, and a physical layer clock is recovered. Therefore, in the embodiments of this invention, processing is performed at a physical layer, and packets are not involved, thereby achieving better performance.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

The following describes exemplary implementation manners of the present invention in detail with reference to accompanying drawings.

Referring to FIG. 2, FIG. 2 is a functional block diagram of an Ethernet device. The Ethernet device includes:
multiple line cards, such as a line card 1, a line card 2, ..., and a line card N, where a specific quantity of line cards may be configured according to an actual requirement, and generally is two or more; and a clock board, configured to generate a system clock and send the system clock to the multiple line cards. All of the multiple line cards and the clock board may be installed on a backplane of the Ethernet device. The Ethernet device may further include a switch module, configured to perform packet switching. The Ethernet device may be specifically an Ethernet device that needs to receive and send a data packet, such as a switch, a router, or an OLT (optical line terminal, optical line terminal).

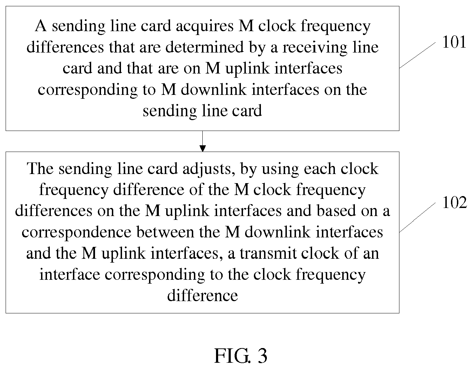

The following describes a clock synchronization method in a multi-clock domain for the Ethernet device. Each line card may be used as a receiving line card and a sending line card at the same time, that is, play two roles for receiving and sending. When a line card is used as a receiving line card, another line card may be used as a sending line card relative to the line card. When a line card is used as a sending line card, another line card may be used as a receiving line card relative to the line card. In an actual embodiment, some interfaces on a line card are connected in the uplink direction, and some interfaces on the line card are connected in the downlink direction. According to a configuration, interface clocks need to be recovered on some or all uplink interfaces, and frequency differences need to be calculated and delivered to a downlink interface for use According to a configuration, a downlink interface selects a different uplink interface recovery clock. After an uplink interface recovery clock is selected, a corresponding uplink interface frequency difference is used to generate a transmit clock. Therefore, in the following description of a clock synchronization method, each line card is named by role. Referring to FIG. 3, the method includes:
Step 101: A sending line card acquires M clock frequency differences that are determined by a receiving line card and that are of M uplink interfaces corresponding to M downlink interfaces on the sending line card, where the M uplink interfaces are uplink interfaces on the receiving line card, and M is a positive integer.
Step 102: The sending line card adjusts, by using each clock frequency difference of the M clock frequency differences of the M uplink interfaces and based on a correspondence between the M downlink interfaces and the M uplink interfaces, a transmit clock of an interface corresponding to the clock frequency difference.

Before step 101, the method further includes: recovering, by the receiving line card, line clocks of N uplink interfaces on the receiving line card to obtain N line recovery clocks, where N is greater than M; and determining, by the receiving line card, a clock frequency difference between each of the N line recovery clocks and a system clock to obtain N clock frequency differences of the N uplink interfaces, where the M clock frequency differences are frequency differences of the N clock frequency differences.

In this embodiment, specifically, the step of recovering, by the receiving line card, line clocks of N uplink interfaces on the receiving line card may be implemented periodically, or line clock recovery is performed in real time. Generally, the N uplink interfaces are corresponding to N interfaces on the receiving line card in a one-to-one manner, and the N uplink interfaces are corresponding to N lines in a one-to-one manner. In an actual embodiment, an actual quantity of interfaces on the receiving line card may be greater than a quantity of uplink interfaces. In addition, the N uplink interfaces in step 101 may be uplink interfaces on different line cards, quantities of interfaces on the receiving line cards may be the same or may be different, and a total quantity is N.

For example, for a receiving line card n, s line recovery clocks are obtained, and separately recorded as Fin_n0/1/2...s, where s represents a total quantity of interfaces on the line card n, and s is a positive integer less than or equal to N.

When the N line recovery clocks are obtained, because a clock board sends a system clock to each line card in real time, the receiving line card determines a clock frequency difference between each of the N line recovery clocks and the system clock. Specifically, for example, a counter is used to calculate a clock frequency difference between each line recovery clock and the system clock; for another example, a phase-locked loop phase detector is used; and a Stratum-3 clock phase-locked loop chip on the market may also be used, where the phase-locked loop chip may read a frequency offset between an input clock and the system clock, that is, a clock frequency difference.

For example, in this embodiment, if the system clock is F0, N clock frequency differences of the N uplink interfaces may be acquired after step 102. For example, Δn0 = Fin_n0_F0, Δn1 = Fin_n1_F0, ..., and Δns = Fin_ns - F0.

After step 102 is completed, the receiving line card may perform processing in the following two manners, but not limited to the following two processing manners. In a first manner, the receiving line card determines a clock frequency difference required by the sending line card, and sends the clock frequency difference to the sending line card. In a second manner, the receiving line card sends all of the determined N clock frequency differences to the sending line card, and the sending line card selects the required M clock frequency differences. Specifically, in the first manner, after the step of determining, by the receiving line card, a clock frequency difference between each of the N line recovery clocks and a system clock, and before step 101, the method further includes: determining, by the receiving line card from the N uplink interfaces and based on a correspondence between an uplink interface and an interface on the sending line card, the M uplink interfaces corresponding to the M downlink interfaces on the sending line card; and sending, by the receiving line card, the M clock frequency differences of the M uplink interfaces to the sending line card. Correspondingly, the sending line card performs step 101 to acquire the M clock frequency differences of the M uplink interfaces corresponding to the M interfaces on the sending line card. The M clock frequency differences are included in the N clock frequency differences obtained in the step before step 101, and M is a positive integer less than or equal to N.

In the second manner, after the step of determining, by the receiving line card, a clock frequency difference between each of the N line recovery clocks and a system clock, the receiving line card sends all of the N clock frequency differences to the sending line card. Step 101 specifically includes: receiving, by the sending line card, the N clock frequency differences of the N uplink interfaces sent by the receiving line card; determining, by the sending line card and based on a correspondence between each interface on the sending line card and an uplink interface, the M uplink interfaces corresponding to the M downlink interfaces; and acquiring, by the sending line card and based on the M uplink interfaces, the M clock frequency differences.

No matter the M clock frequency differences of the M uplink interfaces corresponding to the M downlink interfaces are acquired in step 101 in which manner, step 102 is then performed, that is, based on a correspondence between each interface on the sending line card and the M uplink interfaces, a transmit clock of an interface corresponding to each clock frequency difference of the M clock frequency differences of the M uplink interfaces is adjusted by using the clock frequency difference.

Specifically, for example, a transmit clock is adjusted by increasing or decreasing frequency of the system clock, or a transmit clock is adjusted in real time by using a phase-locked loop according to a target value of a frequency difference, that is, a determined clock frequency difference.

For example, the sending line card is a sending line card m, and a first clock for tracing a line card n is configured on an interface 0 on the sending line card m, that is, an uplink interface 0. A transmit clock of the interface 0 on the line card m is adjusted according to a clock frequency difference of the first clock of the line card n. For example, the transmit clock Fout_m0 of the interface 0 on the line card m is adjusted to F0 + Δn1. That is, in step 102, specifically, the sending line card adjusts a transmit clock of each interface of the M downlink interfaces to a sum of a clock frequency difference corresponding to the interface and a system time difference, so that the transmit clock synchronizes with a recovered line clock.

In an actual system, due to clock drift, F0/Fin_n0/1/2 and the like may change in real time, and similarly, Δn1/Fout_m0 may also change accordingly in real time.

In order for a person skilled in the art to better understand the present invention, the following uses a specific embodiment to describe an implementation process of a clock synchronization method in this embodiment of this invention.

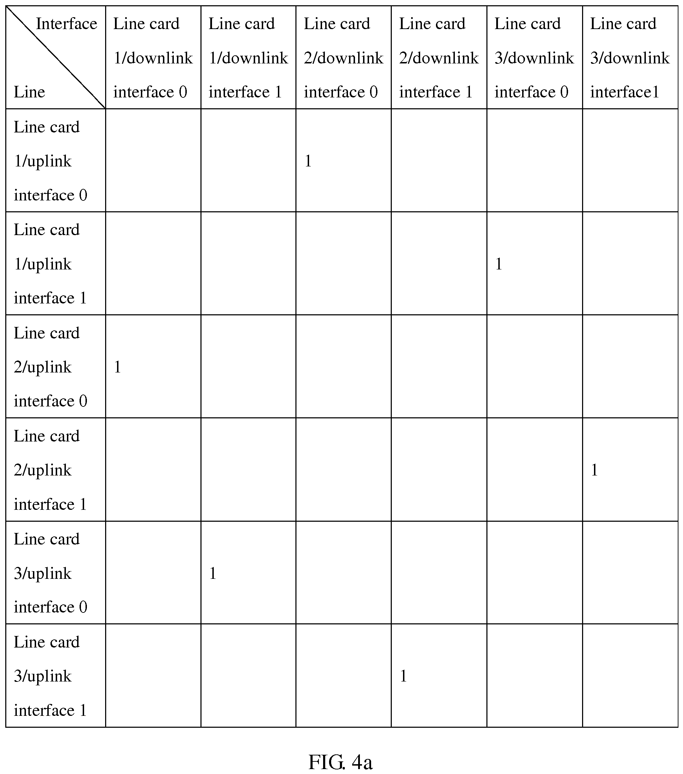

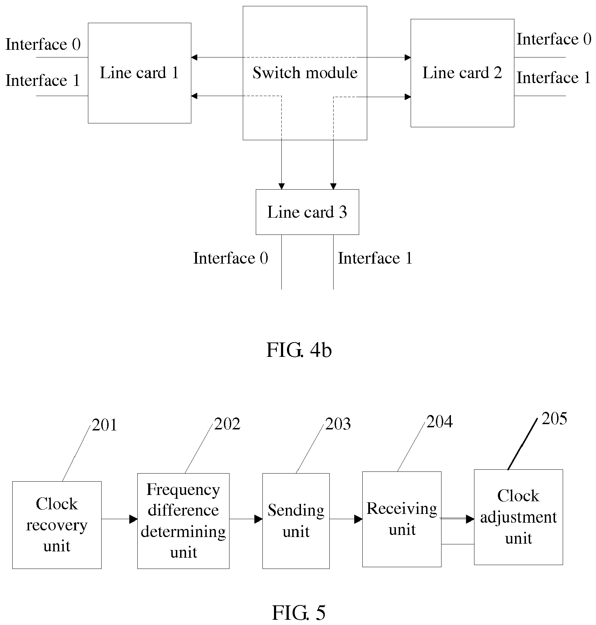

Referring to both FIG. 4a and FIG. 4b, it is assumed that an Ethernet device includes three line cards, a line card 1, a line card 2, and a line card 3 respectively, and each line card has two interfaces: an interface 0 and an interface 1. That is, for the sending line card, each line card may trace at most two line clocks, and for the receiving line card, each line card may receive at most two line clocks. FIG. 4a shows a relational table of a correspondence between an uplink interface on the receiving line card and an interface on the sending line card, where blank indicates that there is no correspondence, the value 1 indicates that there is a correspondence. The table may be configured on each line card, and the relational table may be configured manually or may be configured differently according to different communications protocols. FIG. 4b shows a correspondence, between an uplink interface on the receiving line card and an interface on the sending line card, reflected in terms of a packet switching path.

In this embodiment, it is assumed that the sending line card is the line card 3, and receiving line cards corresponding to the line card 3 are separately the line card 1 and the line card 2. In the step of recovering, by the receiving line card, line clocks of N uplink interfaces on the receiving line card to obtain N line recovery clocks, the line card 1 recovers line clocks of two lines, which are separately a line recovery clock of a first line corresponding to an uplink interface 0 on the line card 1, recorded as a line recovery clock of a line 10, and a line recovery clock of a second line corresponding to an uplink interface 1 on the line card 1, recorded as a line recovery clock of a line 11; the line card 2 recovers line clocks of two lines, which are separately a line recovery clock of a first line corresponding to an uplink interface 0 on the line card 2, recorded as a line recovery clock of a line 20, and a line recovery clock of a second line corresponding to an uplink interface 1 on the line card 2, recorded as a line recovery clock of a line 21. Therefore, in this step, four line recovery clocks in total are obtained. In this embodiment, N is 4.

Then, the line card 1 and the line card 2 calculate clock frequency differences between the four line recovery clocks and a system clock to obtain four clock frequency differences of the four lines, that is four clock frequency differences of the four uplink interfaces, which, for example, are separately recorded as Δ10, Δ11, Δ20, and Δ21, where a first digit indicates a card number of a line card, and a second digit indicates a line identity.

The line card 1 and the line card 2 may first separately determine clock frequency differences required by the line card 3 according to a correspondence table shown in FIG. 4a. For example, the line card 1 determines, according to a correspondence between an uplink interface and an interface on the sending line card, that an uplink interface corresponding to an interface 0 on the line card 3 is the uplink interface 1 on the line card 1, that is, a corresponding line is the line 11; the line card 2 determines, according to the correspondence between an uplink interface and an interface on the sending line card, that an uplink interface corresponding to an interface 1 on the line card 3 is the uplink interface 1 on the line card 2, that is, a corresponding line is the line 21. Then, the line card 1 sends the clock frequency difference Δ11 corresponding to the line 11 to the line card 3, and the line card 2 sends the clock frequency difference Δ21 corresponding to the line 21 to the line card 3.

Alternatively, the line card 1 and the line card 2 separately send, to the line card 3, two clock frequency differences acquired by the line card 1 and the line card 2, four clock frequency differences in total; then the line card 3 determines, according to the correspondence between each interface on the sending line card and an uplink interface shown in FIG. 4a, that a line corresponding to the interface 0 on the line card 3 is the line 11 and that a line corresponding to the interface 1 on the line card 3 is the line 21; therefore, the line card 3 acquires the clock frequency difference Δ11 of the line 11 and the clock frequency difference Δ21 of the line 21. Then, step 102 is performed. That is, based on the correspondence between the M downlink interfaces and the M uplink interfaces, each clock frequency difference of the two acquired clock frequency differences is used to adjust a transmit clock of an interface corresponding to the clock frequency difference. For example, the clock frequency difference Δ11 is used to adjust a transmit clock of the interface 0 on the line card 3, and the clock frequency difference Δ21 is used to adjust a transmit clock of the interface 1 on the line card 3. A specific adjustment manner is as described above: adjusting a transmit clock to a sum of a clock frequency difference and the system clock.

Therefore, the interface 0 on the line card 3 traces a clock source of the line 11, and the interface 1 on the line card 3 traces a clock source of the line 21, so as to implement clock synchronization in a multi-clock domain.

It can be seen from the foregoing description that, in the embodiments of this invention, first, a receiving line card calculates a clock frequency difference between each line clock and a system clock, and then a sending line card adjusts a transmit clock of each interface according to a clock frequency difference of a line corresponding to the interface. Therefore, each interface may trace a different line, that is, trace a different clock source, so as to implement clock synchronization in a multi-clock domain. Further, in the solutions in the embodiments of this invention, a clock is recovered by the receiving line card, and a physical layer clock is recovered. Therefore, in the embodiments of this invention, processing is performed at a physical layer, and packets are not involved, thereby achieving better performance.

In the following, referring to FIG. 5, FIG. 5 is a functional block diagram of each line card of multiple line cards. Each line card includes: a clock recovery unit 201, configured to recover line clocks of M uplink interfaces corresponding to M interfaces on the line card to obtain M line recovery clocks; a frequency difference determining unit 202, configured to determine a clock frequency difference between each of the M line recovery clocks and a system clock, to obtain M clock frequency differences of the M uplink interfaces; a sending unit 203, configured to send the M clock frequency differences to a sending line card, so that the sending line card adjusts, based on the M clock frequency differences, a transmit clock of an interface on the sending line card; a receiving unit 204, configured to receive the M clock frequency differences of the M uplink interfaces corresponding to the M interfaces sent by a receiving line card; and a clock adjustment unit 205, configured to adjust, based on a correspondence between each interface on the sending line card and the M uplink interfaces and by using each clock frequency difference of the M clock frequency differences of the M uplink interfaces sent by the receiving line card, a transmit clock of an interface corresponding to the clock frequency difference.

In a further embodiment, a processing unit is further included, and is configured to determine, based on a correspondence between an uplink interface and an interface on the sending line card and from the M clock frequency differences determined by the frequency difference determining unit 202, a clock frequency difference of a line corresponding to each interface on the sending line card; and the sending unit 203 is configured to send the clock frequency difference of the line corresponding to the interface on the sending line card to a corresponding sending line card.

In another embodiment, a processing unit is further included. The receiving unit 204 is configured to receive N clock frequency differences of N lines sent by the receiving line card, where the N clock frequency differences include the M clock frequency differences of the M uplink interfaces corresponding to the M interfaces, and N is a positive integer greater than or equal to M. The processing unit is configured to determine, based on a correspondence between each interface on the sending line card and an uplink interface, the M uplink interfaces corresponding to the M interfaces, and determine the M clock frequency differences of the M uplink interfaces corresponding to the M interfaces.

Further, the clock adjustment unit 205 is configured to adjust a transmit clock of each interface of the M interfaces to a sum of a clock frequency difference corresponding to the interface and a system time difference.

Each variation and specific example in the foregoing clock synchronization methods shown in FIG. 3 to FIG. 4b are also applicable to the line card in this embodiment. According to the foregoing detailed description of the clock synchronization methods, a person skilled in the art may clearly understand an implementation method of the line card in this embodiment, and therefore, for brevity of the specification, details are not repeatedly described herein.

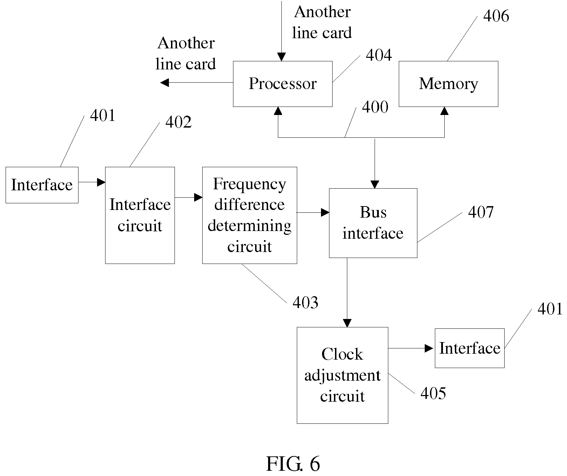

In the following, referring to FIG. 6, FIG. 6 is a block diagram of a hardware implementation example of each line card of multiple line cards in an embodiment of the invention. Each line card includes: M interfaces 401; an interface circuit 402, configured to recover line clocks of M uplink interfaces corresponding to the M interfaces 401 on the line card, to obtain M line recovery clocks; a frequency difference determining circuit 403, configured to determine a clock frequency difference between each of the M line recovery clocks and a system clock, to obtain M clock frequency differences of the M uplink interfaces; a processor 404, configured to send the M clock frequency differences to a sending line card, so that the sending line card adjusts, based on the M clock frequency differences, a transmit clock of an interface 401 on the sending line card, and further configured to receive the M clock frequency differences of the M uplink interfaces corresponding to the M interfaces 401 sent by a receiving line card; and a clock adjustment circuit 405, configured to adjust, based on a correspondence between each interface 401 and the M uplink interfaces and by using each clock frequency difference of the M clock frequency differences of the M uplink interfaces sent by the receiving line card, a transmit clock of an interface 401 corresponding to the clock frequency difference, where M is a positive integer.

In a further embodiment, the processor 404 is further configured to determine, based on a correspondence between an uplink interface and an interface on the sending line card and from the M clock frequency differences determined by the frequency difference determining circuit 403, a clock frequency difference on an uplink interface corresponding to each interface 401 on the sending line card; and send the clock frequency difference on the uplink interface corresponding to the interface 401 on the sending line card to a corresponding sending line card.

In another embodiment, the processor 404 is further configured to receive N clock frequency differences of N uplink interfaces sent by the receiving line card, where the N clock frequency differences include the M clock frequency differences of the M uplink interfaces corresponding to the M interfaces 401, and N is a positive integer greater than or equal to M; and further configured to determine, based on a correspondence between an uplink interface and an interface, the M uplink interfaces corresponding to the M interfaces 401, and determine the M clock frequency differences of the M uplink interfaces corresponding to the M interfaces 401.

Further, the clock adjustment circuit 405 is configured to adjust a transmit clock of each interface 401 of the M interfaces 401 to a sum of a clock frequency difference corresponding to the interface 401 and a system time difference.

FIG. 6 shows a bus architecture (represented by a bus 400). The bus 400 may include any quantity of interconnected buses and bridges. The bus 400 links one or more processors represented by a processor 404 to various circuits of a memory represented by a memory 406; the bus 400 may further link together other various circuits such as a peripheral device, a voltage stabilizer, and a power management circuit, which are well known in the art, and therefore, no further description is given in this specification. A bus interface 407 serves as an interface between the bus 400 and components.

The processor 404 is responsible for management of the bus 400 and general processing, and the memory 406 may be configured to store a correspondence table shown in FIG. 4a, and further configured to store data used when the processor 404 performs an operation.

With reference to each of the foregoing embodiments, the frequency difference determining circuit 403 is specifically a counter or a phase-locked loop phase detector.

With reference to each of the foregoing embodiments, the clock adjustment circuit 405 is specifically a phase-locked loop frequency detector.

With reference to each of the foregoing embodiments, the M interfaces 401 are specifically Ethernet interfaces.

Each variation and specific example in the foregoing clock synchronization methods shown in FIG. 3 to FIG. 4b are also applicable to the line card in this embodiment. According to the foregoing detailed description of the clock synchronization methods, a person skilled in the art may clearly understand an implementation method of the line card in this embodiment, and therefore, for brevity of the specification, details are not repeatedly described herein. Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams. Although some preferred embodiments of the present invention have been described, persons skilled in the art can make changes and modifications to these embodiments once they learn the basic inventive concept. Therefore, the following claims are intended to be construed as to cover the exemplary embodiments and all changes and modifications falling within the scope of the present invention.

Obviously, persons skilled in the art can make various modifications and variations to the embodiments of the present invention without departing from the scope of the embodiments of the present invention. The present invention is intended to cover these modifications and variations provided that they fall within the scope of protection defined by the following claims.

## Claims

1. A clock synchronization method in a multi-clock domain, wherein the method comprises:
acquiring, by a sending line card, M clock frequency differences between M line clocks and a system clock, the differences are determined by a receiving line card for each one of M uplink interfaces corresponding to M downlink interfaces on the sending line card, wherein the M uplink interfaces are uplink interfaces on the receiving line card, and M is a positive integer; and
adjusting, by the sending line card by using each clock frequency difference of the M clock frequency differences of the M uplink interfaces and based on a correspondence between the M downlink interfaces and the M uplink interfaces, a transmit clock of each interface according to a clock frequency difference of a line corresponding to the interface.

2. The method according to claim 1, wherein before the acquiring, by a sending line card, M clock frequency differences that are determined by a receiving line card and that are of M uplink interfaces corresponding to M downlink interfaces on the sending line card, the method further comprises:
recovering, by the receiving line card, line clocks of N uplink interfaces on the receiving line card to obtain N line recovery clocks, wherein N is greater than or equal to M; and
determining, by the receiving line card, a clock frequency difference between each of the N line recovery clocks and a system clock to obtain N clock frequency differences of the N uplink interfaces, wherein the M clock frequency differences are included in the N clock frequency differences.

3. The method according to claim 2, wherein before the acquiring, by a sending line card, M clock frequency differences that are determined by a receiving line card and that are of M uplink interfaces corresponding to M downlink interfaces on the sending line card, the method further comprises:
determining, by the receiving line card from the N uplink interfaces and based on a correspondence between an uplink interface and an interface on the sending line card, the M uplink interfaces corresponding to the M downlink interfaces on the sending line card; and
sending, by the receiving line card, the M clock frequency differences of the M uplink interfaces to the sending line card.

4. The method according to claim 2, wherein the acquiring, by a sending line card, M clock frequency differences that are determined by a receiving line card and that are of M uplink interfaces corresponding to M downlink interfaces on the sending line card comprises:
receiving, by the sending line card, the N clock frequency differences of the N uplink interfaces sent by the receiving line card;
determining, by the sending line card and based on a correspondence between each interface on the sending line card and an uplink interface, the M uplink interfaces corresponding to the M downlink interfaces; and
acquiring, by the sending line card and based of the M uplink interfaces, the M clock frequency differences.

5. The method according to any one of claims 1 to 4, wherein the adjusting, by using each clock frequency difference of M clock frequency differences of the M uplink interfaces, a transmit clock of an interface corresponding to the clock frequency difference comprises:
adjusting, by the sending line card, a transmit clock of each interface of the M downlink interfaces to a sum of a clock frequency difference corresponding to the interface and a system time difference.

6. A line card, comprising:
M interfaces, wherein M is a positive integer;
an interface circuit (402), configured to recover M line clocks of M uplink interfaces corresponding to the M interfaces, to obtain M line recovery clocks;
a frequency difference determining circuit (403), configured to determine a clock frequency difference between each of the M line recovery clocks and a system clock, to obtain M clock frequency differences of the M uplink interfaces;
a processor (404), configured to send the M clock frequency differences to a sending line card, so that the sending line card adjusts, based on the M clock frequency differences, a transmit clock of an interface on the sending line card; and further configured to receive the M clock frequency differences of the M uplink interfaces corresponding to the M interfaces sent by a receiving line card; and
a clock adjustment circuit (405), configured to adjust, based on a correspondence between each interface on the sending line card and the M uplink interfaces and by using each clock frequency difference of the M clock frequency differences of the M uplink interfaces sent by the receiving line card, a transmit clock of each interface according to a clock frequency difference of a line corresponding to the interface.

7. The line card according to claim 6, wherein the processor is further configured to:
determine, based on a correspondence between an uplink interface and an interface on the sending line card and from the M clock frequency differences determined by the frequency difference determining circuit, a clock frequency difference on an uplink interface corresponding to each interface on the sending line card; and send the clock frequency difference on the uplink interface corresponding to the interface on the sending line card to the sending line card.

8. The line card according to claim 6, wherein the processor is further configured to receive N clock frequency differences of N uplink interfaces sent by the receiving line card, wherein the N clock frequency differences comprise the M clock frequency differences of the M uplink interfaces corresponding to the M interfaces, and N is a positive integer greater than or equal to M; and
further configured to determine, based on a correspondence between each interface on the sending line card and an uplink interface, the M uplink interfaces corresponding to the M interfaces, and determine the M clock frequency differences of the M uplink interfaces corresponding to the M interfaces.

9. The line card according to any one of claims 6 to 8, wherein the clock adjustment circuit is configured to adjust a transmit clock of each interface of the M interfaces to a sum of a clock frequency difference corresponding to the interface and a system time difference.

10. The line card according to any one of claims 6 to 9, wherein the frequency difference determining circuit is specifically a counter or a phase-locked loop phase detector.

11. The line card according to any one of claims 6 to 10, wherein the clock adjustment circuit is specifically a phase-locked loop frequency detector.

12. The line card according to any one of claims 6 to 11, wherein the M interfaces are specifically Ethernet interfaces.

13. An Ethernet device, comprising:
multiple line cards; and
a clock board, configured to generate a system clock and send the system clock to each line card of the multiple line cards, wherein
each line card of the multiple line cards is the line card according to any one of claims 6 to 12.

## Patentansprüche

1. Taktsynchronisationsverfahren in einer Mehrtaktdomäne, wobei das Verfahren umfasst:
Erfassen durch eine sendende Leitungskarte von M Taktfrequenzdifferenzen zwischen M Leitungstakten und einem Systemtakt, wobei die Differenzen durch eine empfangende Leitungskarte für jede von M Uplink-Schnittstellen bestimmt werden, die M Downlink-Schnittstellen auf der sendenden Leitungskarte entsprechen, wobei die M Uplink-Schnittstellen Uplink-Schnittstellen auf der empfangenden Leitungskarte sind, und M eine positive ganze Zahl ist; und
Anpassen durch die sendende Leitungskarte eines Sendetakts jeder Schnittstelle gemäß einer Taktfrequenzdifferenz einer Leitung, die der Schnittstelle entspricht, durch Verwenden jeder Taktfrequenzdifferenz der M Taktfrequenzdifferenzen der M Uplink-Schnittstellen und basierend auf einer Entsprechung zwischen den M Downlink-Schnittstellen und den M Uplink-Schnittstellen.

2. Verfahren nach Anspruch 1, wobei das Verfahren vor dem Erfassen durch eine sendende Leitungskarte von M Taktfrequenzdifferenzen, die durch eine empfangende Leitungskarte bestimmt werden und die von M Uplink-Schnittstellen sind, die M Downlink-Schnittstellen auf der sendenden Leitungskarte entsprechen, umfasst:
Rückgewinnen durch die empfangende Leitungskarte von Leitungstakten von N Uplink-Schnittstellen auf der empfangenden Leitungskarte, um N Leitungsrückgewinnungstakte zu erhalten, wobei N größer als oder gleich M ist; und
Bestimmen durch die empfangende Leitungskarte einer Taktfrequenzdifferenz zwischen jedem der N Leitungsrückgewinnungstakte und einem Systemtakt, um N Taktfrequenzdifferenzen der N Uplink-Schnittstellen zu erhalten, wobei die M Taktfrequenzdifferenzen in den N Taktfrequenzdifferenzen enthalten sind.

3. Verfahren nach Anspruch 2, wobei das Verfahren vor dem Erfassen durch eine sendende Leitungskarte von M Taktfrequenzdifferenzen, die durch die empfangende Leitungskarte bestimmt werden und die von M Uplink-Schnittstellen sind, die M Downlink-Schnittstellen auf der sendenden Leitungskarte entsprechen, umfasst:
Bestimmen durch die empfangende Leitungskarte der M Uplink-Schnittstellen, die den M Downlink-Schnittstellen auf der sendenden Leitungskarte entsprechen, aus den N Uplink-Schnittstellen und basierend auf einer Entsprechung zwischen einer Uplink-Schnittstelle und einer Schnittstelle auf der sendenden Leitungskarte; und Senden der M Taktfrequenzdifferenzen der M Uplink-Schnittstellen durch die empfangende Leitungskarte an die sendende Leitungskarte.

4. Verfahren nach Anspruch 2, wobei das Erfassen durch eine sendende Leitungskarte von M Taktfrequenzdifferenzen, die durch eine empfangende Leitungskarte bestimmt werden und die von M Uplink-Schnittstellen sind, die M Downlink-Schnittstellen auf der sendenden Leitungskarte entsprechen, umfasst:
Empfangen durch die sendende Leitungskarte der durch die empfangende Leitungskarte gesendeten N Taktfrequenzdifferenzen der N Uplink-Schnittstellen;
Bestimmen der M Uplink-Schnittstellen, die den M Downlink-Schnittstellen entsprechen, durch die sendende Leitungskarte und basierend auf einer Entsprechung zwischen jeder Schnittstelle auf der sendenden Leitungskarte und einer Uplink-Schnittstelle; und
Erfassen der M Taktfrequenzdifferenzen durch die sendende Leitungskarte und basierend auf den M Uplink-Schnittstellen.

5. Verfahren nach einem der Ansprüche 1 bis 4, wobei das Anpassen eines Sendetakts einer Schnittstelle, die der Taktfrequenzdifferenz entspricht, durch Verwenden jeder Taktfrequenzdifferenz von M Taktfrequenzdifferenzen der M Uplink-Schnittstellen umfasst:
Anpassen durch die sendende Leitungskarte eines Sendetakts jeder Schnittstelle der M Downlink-Schnittstellen an eine Summe einer Taktfrequenzdifferenz, die der Schnittstelle entspricht, und einer Systemzeitdifferenz.

6. Leitungskarte, umfassend:
M Schnittstellen, wobei M eine positive ganze Zahl ist;
eine Schnittstellenschaltung (402), die so konfiguriert ist, dass sie M Leitungstakte von M Uplink-Schnittstellen, die den M Schnittstellen entsprechen, rückgewinnt, um M Leitungsrückgewinnungstakte zu erhalten;
eine Frequenzdifferenzbestimmungsschaltung (403), die so konfiguriert ist, dass sie eine Taktfrequenzdifferenz zwischen jedem der M Leitungsrückgewinnungstakte und einem Systemtakt bestimmt, um M Taktfrequenzdifferenzen der M Uplink-Schnittstellen zu erhalten;
einen Prozessor (404), der so konfiguriert ist, dass er die M Taktfrequenzdifferenzen an eine sendende Leitungskarte sendet, so dass die sendende Leitungskarte einen Sendetakt einer Schnittstelle auf der sendenden Leitungskarte basierend auf den M Taktfrequenzdifferenzen anpasst; und ferner so konfiguriert ist, dass er die durch die empfangende Leitungskarte gesendeten M Taktfrequenzdifferenzen der M Uplink-Schnittstellen empfängt, die den M Schnittstellen entsprechen; und
eine Taktanpassungsschaltung (405), die so konfiguriert ist, dass sie basierend auf einer Entsprechung zwischen jeder Schnittstelle auf der sendenden Leitungskarte und den M Uplink-Schnittstellen und durch Verwenden jeder Taktfrequenzdifferenz der durch die empfangende Leitungskarte gesendeten M Taktfrequenzdifferenzen der M Uplink-Schnittstellen einen Sendetakt jeder Schnittstelle gemäß einer Taktfrequenzdifferenz einer Leitung anpasst, die der Schnittstelle entspricht.

7. Leitungskarte nach Anspruch 6, wobei der Prozessor ferner konfiguriert ist zum:
Bestimmen basierend auf einer Entsprechung zwischen einer Uplink-Schnittstelle und einer Schnittstelle auf der sendenden Leitungskarte und aus den durch die Frequenzdifferenzbestimmungsschaltung bestimmten M Taktfrequenzdifferenzen einer Taktfrequenzdifferenz auf einer Uplink-Schnittstelle, die jeder Schnittstelle auf der sendenden Leitungskarte entspricht; und Senden der Taktfrequenzdifferenz auf der Uplink-Schnittstelle, die der Schnittstelle auf der sendenden Leitungskarte entspricht, an die Sendeleitungskarte.

8. Leitungskarte nach Anspruch 6, wobei der Prozessor ferner so konfiguriert ist, dass er N Taktfrequenzdifferenzen von N Uplink-Schnittstellen empfängt, die durch die empfangende Leitungskarte gesendet werden, wobei die N Taktfrequenzdifferenzen die M Taktfrequenzdifferenzen der M Uplink-Schnittstellen umfassen, die den M Schnittstellen entsprechen, und N eine positive ganze Zahl größer als oder gleich M ist; und
ferner so konfiguriert ist, dass er basierend auf einer Entsprechung zwischen jeder Schnittstelle auf der sendenden Leitungskarte und einer Uplink-Schnittstelle die M Uplink-Schnittstellen bestimmt, die den M Schnittstellen entsprechen, und die M Taktfrequenzdifferenzen der M Uplink-Schnittstellen bestimmt, die den M Schnittstellen entsprechen.

9. Leitungskarte nach einem der Ansprüche 6 bis 8, wobei die Taktanpassungsschaltung so konfiguriert ist, dass sie den Sendetakt jeder Schnittstelle der M Schnittstelle an eine Summe einer Taktfrequenzdifferenz, die der Schnittstelle entspricht, und einer Systemzeitdifferenz anpasst.

10. Leitungskarte nach einem der Ansprüche 6 bis 9, wobei die Frequenzdifferenzbestimmungsschaltung insbesondere ein Zähler oder ein Phasenregelkreis-Phasendetektor ist.

11. Leitungskarte nach einem der Ansprüche 6 bis 10, wobei die Taktanpassungsschaltung insbesondere ein Phasenregelkreis-Frequenzdetektor ist.

12. Leitungskarte nach einem der Ansprüche 6 bis 11, wobei die M Schnittstellen insbesondere Ethernet-Schnittstellen sind.

13. Ethernet-Vorrichtung, umfassend:
mehrere Leitungskarten; und
eine Taktplatine, die zum Erzeugen eines Systemtakts und Senden des Systemtakts an jede Leitungskarte der mehreren Leitungskarten konfiguriert ist, wobei jede Leitungskarte der mehreren Leitungskarten die Leitungskarte nach einem der Ansprüche 6 bis 12 ist.

## Revendications

1. Procédé de synchronisation d'horloges dans un domaine à horloges multiples, où le procédé comprend les étapes suivantes :
acquérir, par une carte de ligne d'émission, M différences de fréquences d'horloges entre M horloges de ligne et une horloge système, les différences sont déterminées par une carte de ligne de réception pour chacune de M interfaces de liaison montante correspondant à M interfaces de liaison descendante sur la carte de ligne d'émission, où les M interfaces de liaison montante sont des interfaces de liaison montante sur la carte de ligne de réception, et M est un nombre entier positif ; et
ajuster, par la carte de ligne d'émission, en utilisant chaque différence de fréquences d'horloges des M différences de fréquences d'horloges des M interfaces de liaison montante et sur la base d'une correspondance entre les M interfaces de liaison descendante et les M interfaces de liaison montante, une horloge d'émission de chaque interface selon une différence de fréquences d'horloges d'une ligne correspondant à l'interface.

2. Procédé selon la revendication 1, dans lequel avant l'acquisition, par une carte de ligne d'émission, de M différences de fréquences d'horloges qui sont déterminées par une carte de ligne de réception et qui sont de M interfaces de liaison montante correspondant à M interfaces de liaison descendante sur la carte de ligne d'émission, le procédé comprenant en outre les étapes suivantes :
récupérer, par la carte de ligne de réception, des horloges de ligne de N interfaces de liaison montante sur la carte de ligne de réception pour obtenir N horloges de récupération de ligne, où N est supérieur ou égal à M ; et
déterminer, par la carte de ligne de réception, une différence de fréquences d'horloges entre chacune des N horloges de récupération de ligne et une horloge système pour obtenir N différences de fréquences d'horloges des N interfaces de liaison montante, où les M différences de fréquences d'horloges sont incluses dans les N différences de fréquences d'horloges.

3. Procédé selon la revendication 2, dans lequel, avant l'acquisition, par une carte de ligne d'émission, de M différences de fréquences d'horloges qui sont déterminées par une carte de ligne de réception et qui sont de M interfaces de liaison montante correspondant à M interfaces de liaison descendante sur la carte de ligne d'émission, le procédé comprend en outre les étapes suivantes :
déterminer, par la carte de ligne de réception, depuis les N interfaces de liaison montante, et sur la base d'une correspondance entre une interface de liaison montante et une interface sur la carte de ligne d'émission, les M interfaces de liaison montante correspondant aux M interfaces de liaison descendante sur la carte de ligne d'émission ; et
envoyer, par la carte de ligne de réception, les M différences de fréquences d'horloges des M interfaces de liaison montante à la carte de ligne d'émission.

4. Procédé selon la revendication 2, dans lequel l'acquisition, par une carte de ligne d'émission, de M différences de fréquences d'horloges qui sont déterminées par une carte de ligne de réception et qui sont de M interfaces de liaison montante correspondant à M interfaces de liaison descendante sur la carte de ligne d'émission comprend les étapes suivantes :
recevoir, par la carte de ligne d'émission, les N différences de fréquences d'horloges des N interfaces de liaison montante envoyées par la carte de ligne de réception ;
déterminer, par la carte de ligne d'émission, et sur la base d'une correspondance entre chaque interface sur la carte de ligne d'émission et d'une interface de liaison montante, les M interfaces de liaison montante correspondant aux M interfaces de liaison descendante ; et
acquérir, par la carte de ligne d'émission, et sur la base des M interfaces de liaison montante, les M différences de fréquences d'horloges.

5. Procédé selon l'une quelconque des revendications 1 à 4, dans lequel l'ajustement, en utilisant chaque différence de fréquences d'horloges des M différences de fréquences d'horloges des M interfaces de liaison montante, d'une horloge d'émission d'une interface correspondant à la différence de fréquences d'horloges comprend l'étape suivante :
ajuster, par la carte de ligne d'émission, une horloge d'émission de chaque interface des M interfaces de liaison descendante à une somme d'une différence de fréquences d'horloges correspondant à l'interface et d'une différence de temps système.

6. Carte de ligne, comprenant :
M interfaces, où M est un nombre entier positif ;
un circuit d'interface (402), configuré pour récupérer M horloges de ligne de M interfaces de liaison montante correspondant aux M interfaces, pour obtenir M horloges de récupération de ligne ;
un circuit de détermination de différence de fréquences (403), configuré pour déterminer une différence de fréquences d'horloges entre chacune des M horloges de récupération de ligne et une horloge système, pour obtenir M différences de fréquences d'horloges des M interfaces de liaison montante ;
un processeur (404), configuré pour envoyer les M différences de fréquences d'horloges à une carte de ligne d'émission, de manière à ce que la carte de ligne d'émission ajuste, sur la base des M différences de fréquences d'horloges, une horloge d'émission d'une interface sur la carte de ligne d'émission ; et en outre configuré pour recevoir les M différences de fréquences d'horloges des M interfaces de liaison montante correspondant aux M interfaces envoyées par une carte de ligne de réception ; et
un circuit d'ajustement d'horloge (405), configuré pour ajuster, sur la base d'une correspondance entre chaque interface sur la carte de ligne d'émission et les M interfaces de liaison montante, et en utilisant chaque différence de fréquences d'horloges des M différences de fréquences d'horloges des M interfaces de liaison montante envoyées par la carte de ligne de réception, une horloge d'émission de chaque interface en fonction d'une différence de fréquences d'horloges d'une ligne correspondant à l'interface.

7. Carte de ligne selon la revendication 6, dans laquelle le processeur est en outre configuré pour : déterminer, sur la base d'une correspondance entre une interface de liaison montante et une interface sur la carte de ligne d'émission et à partir des M différences de fréquences d'horloges déterminées par le circuit de détermination de différence de fréquences, une différence de fréquences d'horloges sur une interface de liaison montante correspondant à chaque interface sur la carte de ligne d'émission ; et envoyer la différence de fréquences d'horloges sur l'interface de liaison montante correspondant à l'interface sur la carte de ligne d'émission à la carte de ligne d'émission.

8. Carte de ligne selon la revendication 6, dans laquelle le processeur est en outre configuré pour recevoir N différences de fréquences d'horloges de N interfaces de liaison montante envoyées par la carte de ligne de réception, où les N différences de fréquences d'horloges comprennent les M différences de fréquences d'horloges des M interfaces de liaison montante correspondant aux M interfaces, et N est un nombre entier positif supérieur ou égal à M ; et
en outre configuré pour déterminer, sur la base d'une correspondance entre chaque interface sur la carte de ligne d'émission et une interface de liaison montante, les M interfaces de liaison montante correspondant aux M interfaces, et déterminer les M différences de fréquences d'horloges des M interfaces de liaison montante correspondant aux M interfaces.

9. Carte de ligne selon l'une quelconque des revendications 6 à 8, dans laquelle le circuit d'ajustement d'horloge est configuré pour ajuster une horloge d'émission de chaque interface des M interfaces à une somme d'une différence de fréquences d'horloges correspondant à l'interface et d'une différence de temps système.

10. Carte de ligne selon l'une quelconque des revendications 6 à 9, dans laquelle le circuit de détermination de différence de fréquences est spécifiquement un compteur ou un détecteur de phase à boucle à verrouillage de phase.

11. Carte de ligne selon l'une quelconque des revendications 6 à 10, dans laquelle le circuit d'ajustement d'horloge est spécifiquement un détecteur de fréquence à boucle à verrouillage de phase.

12. Carte de ligne selon l'une quelconque des revendications 6 à 11, dans laquelle les M interfaces sont spécifiquement des interfaces Ethernet.

13. Dispositif Ethernet, comprenant :
plusieurs cartes de ligne ; et
une carte d'horloge, configurée pour générer une horloge système et envoyer l'horloge système à chaque carte de ligne des multiples cartes de ligne, où chaque carte de ligne parmi les multiples cartes de ligne est la carte de ligne selon l'une quelconque des revendications 6 à 12.
